Europäisches Patentamt

European Patent Office

Office européen des brevets

(11) Veröffentlichungsnummer: **0 087 485**
**B1**

(12) **EUROPÄISCHE PATENTSCHRIFT**

(45) Veröffentlichungstag der Patentschrift:
22.05.85

(51) Int. Cl.⁴: **H 04 N 9/68**

(21) Anmeldenummer: **82101519.5**

(22) Anmeldetag: **27.02.82**

(54) **IC-Satz mit drei integrierten Schaltungen zur digitalen Videosignal-Verarbeitung in Farbfernsehempfängern.**

(43) Veröffentlichungstag der Anmeldung:
07.09.83 Patentblatt 83/36

(45) Bekanntmachung des Hinweises auf die Patenterteilung:
22.05.85 Patentblatt 85/21

(84) Benannte Vertragsstaaten:
DE FR GB IT NL

(56) Entgegenhaltungen:
DE - B - 2 252 181

EINE NEUE DIMENSION - VLSI-DIGITAL-TV-SYSTEM,
September 1981, Intermetall, Seiten 6-11, Freiburg, DE.

(73) Patentinhaber: **Deutsche ITT Industries GmbH,
Hans-Bunte-Strasse 19 Postfach 840, D-7800 Freiburg
(DE)**

(84) Benannte Vertragsstaaten: **DE**

(73) Patentinhaber: **ITT INDUSTRIES INC., 320 Park Avenue,
New York, NY 10022 (US)**

(84) Benannte Vertragsstaaten: **FR GB IT NL**

(72) Erfinder: **Freyberger, Laurin Clemens, Dipl.-Ing., Unter
Stad 3, D-7836 Bahlingen a.K. (DE)**
Erfinder: **Mlynek, Daniel, Dr., 7, rue des Jardins,
F-68600 Wolfgantzen (FR)**
Erfinder: **Schmidtpott, Friedrich, Ing.grad.,
Gewerbestrasse 13, D-7803 Gundelfingen (DE)**

(74) Vertreter: **Stutzer, Gerhard, Dr., Deutsche ITT Industries
GmbH Patent- und Lizenzabteilung
Hans-Bunte-Strasse 19 Postfach 840, D-7800 Freiburg
(DE)**

Anmerkung: Innerhalb von neun Monaten nach der Bekanntmachung des Hinweises auf die Erteilung des europäischen
Patents im Europäischen Patentblatt kann jedermann beim Europäischen Patentamt gegen das erteilte europäische Patent
Einspruch einlegen. Der Einspruch ist schriftlich einzureichen und zu begründen. Er gilt erst als eingelegt, wenn die
Einspruchsgebühr entrichtet worden ist (Art. 99(1) Europäisches Patentübereinkommen).

## Beschreibung

Die Erfindung betrifft entsprechend dem Oberbegriff des Anspruchs 1 einen IC-Satz mit drei integrierten Schaltungen zur digitalen Videosignalverarbeitung in Farbfernsehempfängern, wie er in der Firmenveröffentlichung von Intermetall mit dem Titel „Eine neue Dimension – VLSI-Digital-TV-System", Freiburg im Breisgau, September 1981 auf den Seiten 6 bis 11 beschrieben ist (vgl. auch die entsprechende englische Ausgabe,, A new dimension – VLSI Digital TV System", ebenfalls September 1981).

Die erste integrierte Schaltung, die in den genannten Veröffentlichungen mit der Nummer MAA 2200 und als Videoprozessor (VPU) bezeichnet ist, enthält u. a. einen Analog/Digital-Wandler, eine diesem nachgeschaltete erste Bus-Interfaceschaltung eines seriellen Datenbusses und einen dieser nachgeschalteten ersten Multiplexer. Dem Analog/Digital-Wandler sind Messdaten, die den bei Schwarz und Weiss in jedem der drei Elektronenstrahlsysteme fliessenden Kathodenströmen der Bildröhre (= Dunkelstrom, Weisswert) entsprechen, und das Signal eines Photosensors für die Raumhelligkeit über einen zweiten Multiplexer in der Vertikalaustaslücke zugeführt, und ferner dem ersten Multiplexer die aufbereiteten digitalen Chrominanzsignale.

Die zweite integrierte Schaltung, die in den gennanten Veröffentlichungen mit MAA 2000 und als zentrale Steuerschaltung (CCU) bezeichnet ist, enthält einen Mikroprozessor, einen elektrisch umprogrammierbaren Speicher und eine zweite Bus-Interfaceschaltung für den seriellen Datenbus. Im Speicher sind vom Hersteller des Farbfernsehempfängers eingegebene Abgleichdaten und eingegebene Dunkelstrom/Weisswert-Solldaten enthalten, aus denen und den Messdaten der Mikroprozessor videosignalunabhängige Betriebsdaten für die Bildröhre erzeugt.

Die dritte integrierte Schaltung, die in den gennanten Veröffentlichungen mit MAA 2100 und als Video-Codec-IC (VCU) bezeichnet ist, enthält u. a. einen Demultiplexer, eine analoge RGB-Matrix und je einen Analogverstärker zur Ansteuerung des entsprechenden Elektronenstrahlsystems über externe Videoendstufen. Über den Arbeitspunkt des jeweiligen Analogverstärkers erfolgt nach entsprechender Digital/Analog-Wandlung die Dunkelstromeinstellung der Bildröhre und über dessen Verstärkung deren Weisswerteinstellung. Der Demultiplexer ist über einen Chromabus mit dem ersten Multiplexer der ersten integrierten Schaltung verbunden.

Zum Stand der Technik eines derartigen digitalen Farbfernsehempfängersystems wird ferner auf die Zeitschrift „Elektronik", 14. August 1981 (Heft 16), S. 27 bis 35, und die Zeitschrift „Electronics", 11. August 1981, S. 97 bis 103, verwiesen.

Bei der nach den genannten Veröffentlichungszeitpunkten folgenden Weiterentwicklung des bekannten Systems stellte sich das Problem, auf welche konkrete Art und Weise die Dunkelstrom/Weisswert-Regelung der Bildröhre innerhalb des vorhandenen Systems, insbesondere bezüglich der Messwerterfassung und Messdatenübertragung sowie hinsichtlich der Betriebsdatenübertragung an die Bildröhre, vorzunehem ist.

Bei der Weiterentwicklung des bekannten Systems trat ferner die Forderung auf, auch die Leckströme der Elektronenstrahlsysteme der Bildröhre innerhalb des gegebenen Systems zu erfassen und weiterzuverarbeiten. Die Lösung dieser Problematik soll dabei auf dem Hintergrund der immer gestellten Forderung nach einer möglichst geringen Anzahl äusserer Anschlüsse der einzelnen integrierten Schaltungen erfolgen.

Die Aufgabe der in den Ansprüchen gekennzeichneten Erfindung besteht in der Lösung der aufgezeigten Problematik, wobei als wesentliche Lösungsprinzipien, die die Vorteile der Erfindung unmittelbar bedingen, zum einen die Aufteilung der Messung auf vier aufeinanderfolgende Vertikalaustastlücken, zum anderen die Ausnutzung einer Leitung des eigentlich zur Übertragung des Chrominanzsignals dienenden Chromabusses zu Beginn der nachfolgenden Vertikalaustastlücke und schliesslich die Messung der Raumhelligkeit mittels des Fotosensors und die Messung der Leckströme während einer einzigen Vertikalaustastlücke anzusehen sind.

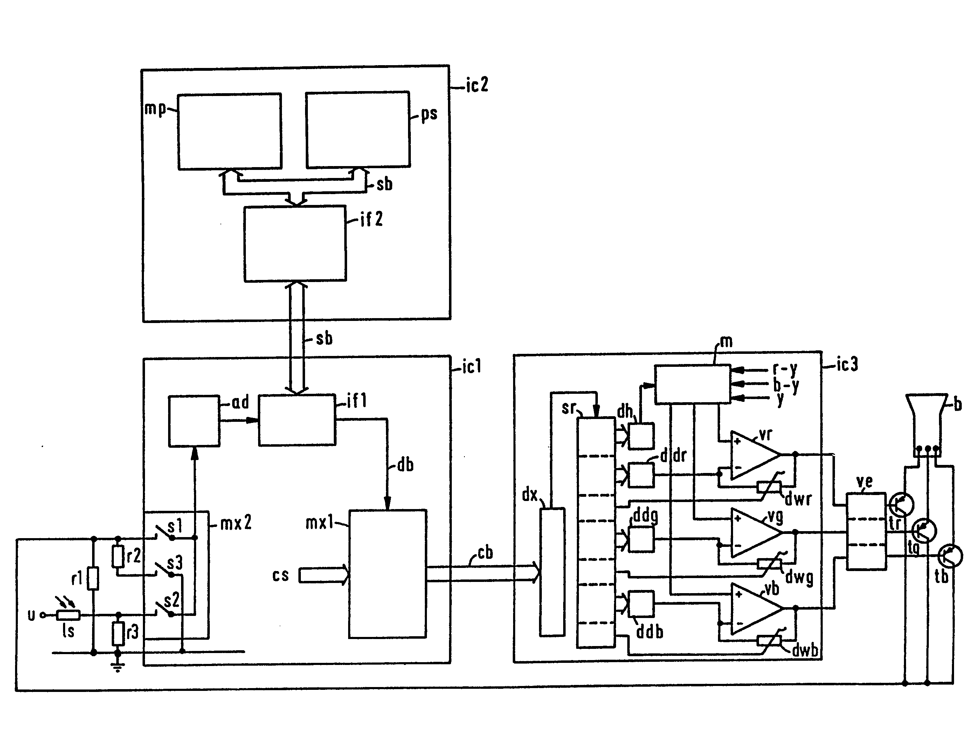

Die Erfindung wird nun anhand der Figur der Zeichnung näher erläutert; sie zeigt in der Art eines Blockschaltbilds ein Ausführungsbeispiel des erfindungsgemässen IC-Satzes. Es lässt zunächst die erste, zweite und dritte integrierte Schaltung ic1, ic2, ic3 erkennen, die als stark umrandete Rechtecke gezeichnet sind. Die erste integrierte Schaltung ic1 enthält u. a. den Analog/Digital-Wandler ad, der Dunkelstrom-, Weisswert-, Fotosensor- und Leckstrom-Messdaten in Digitalsignale umwandelt, die der ersten Bus-Interfaceschaltung if1 zugeführt sind. Diese steht über den seriellen Datenbus sb mit dem ersten Multiplexer mx1 in Verbindung, der von der ersten Bus-Interfaceschaltung if1 über die Leitung db zu ihm weitergeschaltete Daten mit innerhalb der ersten integrierten Schaltung ic1 erzeugten digitalen Chrominanzsignalen cs verschachtelt und an den Chromabus cb weitergibt. Die Erzeugung der erwähnten digitalen Chrominanzsignale cs liegt ausserhalb des Rahmens der Erfindung und ist im übrigen aus den genannten Literaturstellen bekannt.

Die erste integrierte Schaltung ic1 enthält ferner als für die Erfindung wichtige Teilschaltung den zweiten Multiplexer mx2, der aus den drei elektronischen Schaltern s1, s2, s3 besteht. Der Eingang des ersten Schalters s1 liegt über den ersten Widerstand r1 am Schaltungsnullpunkt und ferner am jeweiligen Kollektor des dem entsprechenden Elektronenstrahlsystem extern zugeordneten Transistors tr, tg, tb, über dessen Basis-Emitterstrecke die Kathoden der drei Elektronenstrahlsysteme von den Videoendstufen ve angesteuert sind. Mit den Endbuchstaben r, g, b in den Bezugszeichen tr, tg, tb wie auch in den noch zu erläuternden weiteren Bezugszeichen ist jeweils die Zuordnung zum Elektronenstrahlsystem für Rot (r), Grün (g) und Blau (b) bezeichnet. Der Ausgang des ersten Schalters s1 liegt am Eingang des Analog/Digital-Wandlers ad.

Der Eingang des zweiten Schalters s2 liegt am Fotosensor 1s, der mit seinem anderen Anschluss an einer konstanten Spannung u liegt und mit dem zum Schaltungsnullpunkt führenden Widerstand r3 einen Spannungsteiler bildet; der Eingang des zweiten Schalters s2 liegt also am Abgriff dieses Spannungsteilers, während sein Ausgang ebenfalls am Eingang des Analog/Digital-Wandlers ad angeschlossen ist.

Der Eingang des dritten Schalters s3 liegt über den zweiten Widerstand r2 am Eingang des ersten Schalters s1, während der Ausgang des dritten Schalters s3 mit dem Schaltungsnullpunkt verbunden ist. Der Widerstand r1 ist etwa um eine Grössenordnung grösser als der Widerstand r2.

Während des gesamten auf dem Bildschirm der Bildröhre b gezeigten Bildes und auch während des gesamten Vertikalhinlaufs sind der erste und der dritte Schalter s1, s3 geschlossen und der zweite Schalter s2 offen. Dagegen sind während des Vertikalrücklaufs für die Weisswertmessung die Schalter s1, s3 geschlossen und der Schalter s2 offen bzw. für die Dunkelstrommessung und die Leckstrommessung der Schalter s1 geschlossen und die Schalter s2, s3 offen bzw. für die Fotostrommessung die Schalter s2, s3 geschlossen und der Schalter s1 offen.

Dunkelstrom- und Weisswertmessung jedes Elektronenstrahlsystems sowie die Messung des Fotosensorstroms und der Kathodenleckströme erfolgen in vier aufeinanderfolgenden Vertikalaustastlücken, und zwar wird die entsprechende Kathode einerseits auf eine Spannung us für Ultraschwarz und andererseits auf eine Spannung ud für Schwarz und anschliessend auf eine Spannung uw für Weiss entsprechend folgender Tabelle gelegt:

| Vertikal-austastlücke Nr. | Messung | | Kathode | | |
|---|---|---|---|---|---|
| | in der ersten Hälfte der Vertikalaustastlücke | etwa am Ende der Vertikalaustastlücke | Rot | Grün | Blau |
| 1 | Leckströme der Kathoden | Fotosensorstrom | us | us | us |
| 2 | Dunkelstrom Rot | Weisswert Rot | ud/uw | us | us |
| 3 | Dunkelstrom Grün | Weisswert Grün | us | ud/uw | us |
| 4 | Dunkelstrom Blau | Weisswert Blau | us | us | ud/uw |

Die Spannung ud für Schwarz ist wie üblich eine solche, die auf dem Bildschirm der Bildröhre b gerade keine Helligkeit mehr hervorruft, d. h. also eine Spannung, die gerade an der Dunkelschwelle der Bildröhre liegt. Die Spannung us für Ultraschwarz ist dann eine Kathodenspannung, die weiter in Richtung Schwarz als die Spannung für Schwarz liegt. Die Spannung für Weiss ist die Spannung für die für dieses Messen vorgesehene Helligkeit des Bildschirms, der i. allg. unterhalb der maximal zulässigen Helligkeit liegt.

Während der jeweiligen Vertikalaustastlücke werden also jeweils zwei Messungen vorgenommen, und zwar eine in der ersten Hälfte, vorzugsweise bei einem Drittel Impulsdauer der Vertikalaustastlücke, und die andere etwa an deren Ende. Die erste Messung erfasst dabei in den vier aufeinanderfolgenden Vertikalaustastlücken die Leckströme der Kathoden und die Dunkelströme für Rot, Grün und Blau. Die zweiten Messungen erfassen den Fotosensorstrom und die Weisswerte für Rot, Grün und Blau. Bei der Messung der Kathodenleckströme und des Fotosensorstroms liegen alle drei Kathoden auf der Spannung us. Bei den Messungen für Dunkelstrom und Weisswert der entsprechenden Kathode ist diese auf die entsprechende Dunkelstromkathodenspannung ud bzw. Weisswertkathodenspannung uw geschaltet, während die Kathoden der beiden nicht zu messenden anderen Elektronenstrahlsysteme mit der Spannung us beaufschlagt sind.

Die zweite integrierte Schaltung ic2 enthält den Mikroprozessor mp, den elektrisch umprogrammierbaren Speicher ps und die dem seriellen Datenbus sb in dieser integrierten Schaltung zugeordnete zweite Bus-Interfaceschaltung if2, die auch Mikroprozessor mp und Speicher ps untereinander und mit sich selbst verbindet. Im Speicher ps sind vom Hersteller des Farbfernsehempfängers eingegebene Abgleichdaten und auch von ihm eingegebene Dunkelstrom/Weisswert-Solldaten der verwendeten Bildröhre enthalten. Aus diesen Abgleich- und Solldaten sowie aus den über den zweiten Multiplexer mx2 und den Analog/Digital-Wandler ad der ersten integrierten Schaltung ic1 gewonnenen Messdaten erzeugt der Mikroprozessor mp videosignalunabhängige Betriebsdaten für die Bildröhre. Die Erzeugung dieser Betriebsdaten liegt ebenfalls ausserhalb des Rahmens der Erfindung; es sei lediglich angemerkt, dass der Mikroprozessor in bezug auf die Betriebsdaten der Bildröhre eine Regelfunktion nach vorgegebener Regelkennlinie ausübt.

Die dritte integrierte Schaltung ic3 enthält u. a. den über den Chromabus cb mit dem ersten Multiplexer mx1 der ersten integrierten Schaltung ic1 in Verbindung stehenden Demultiplexer dx, der aus den auf dem Chromabus laufenden verschachtelten Signalen einerseits die Chrominanzsignale cs und andererseits die Betriebsdaten der Bildröhre separiert. Während die Messdatenübertragung vom Analog/Digital-Wandler ad zum Mikroprozessor mp der zweiten integrierten Schaltung ic2 zu einem geeigneten Zeitpunkt über die beiden Interfaceschaltungen if1, if2 und den Datenbus sb erfolgt, werden die vom Mikroprozessor mp erzeugten videosignalunabhängigen Betriebsdaten für die Bildröhre b von der zweiten integrierten Schaltung ic2 über die beiden Interfaceschaltungen if1, if2 und die Leitung db zum ersten Multiplexer mx1 zu einem geeigneten Zeitpunkt und von hier kurz nach Beginn der nächsten Vertikalaustastlücke über eine Leitung des Chromabusses cb in das Schieberegister sr der dritten integrierten Schaltung ic3 übertragen. Hierzu enthält die erste Interfaceschaltung if1 ebenfalls ein Schieberegister, aus dem die Betriebsdaten seriell ausgelesen werden.

Während dieser Datenübertragung in das Schieberegister sr sind die Kathoden der Bildröhre b vorzugsweise auf die Spannung us gelegt, damit diese Datenübertragung nicht auf dem Bildschirm sichtbar ist.

Der geeignete Zeitpunkt für die Messdatenübertragung zum Mikroprozessor mp wird von diesem selbst bestimmt, d. h. je nach in ihm ablaufendem Programm und der dafür benötigten Zeit erfolgt der Messdatenabruf aus den Interfaceschaltungen nicht zum Messzeitpunkt, sondern zu einem wählbaren Zeitpunkt innerhalb des Arbeitsprogramms des Mikroprozessors mp. Sollte zum Abrufzeitpunkt die gerade laufende Messung noch nicht beendet sein, so werden nach einer vorteilhaften Ausgestaltung der Erfindung die von der vorgehenden Messung noch gespeicherten Messdaten zum Mikroprozessor mp übertragen.

Wie bereits erwähnt, gelangen die Betriebsdaten für die Bildröhre b zu Beginn einer Vertikalaustastlücke in das Schieberegister sr. Seine Parallelausgänge sind pro Betriebswert zu Gruppen zusammengefasst, und jeder Gruppe ist einer der Digital/Analog-Wandler dh, ddr, ddg, ddb, dwr, dwg, dwb zugeordnet. In der Figur ist die Aufteilung des Schieberegisters sr in Gruppen durch die gestrichelt gezeichnete Unterteilung angedeutet. Mit dem Schieberegister sr wird in üblicher Weise eine Serien-Parallel-Wandlung vorgenommen, da die Betriebsdaten vom Demultiplexer dx seriell in das Schieberegister eingegeben werden und an seinen Parallelausgängen dann abgenommen werden können.

Der Digital/Analog-Wandler dh erzeugt das analoge Helligkeitssteuersignal, das der RGB-Matrix m zugeführt ist, der auch die analogen Farbdifferenzsignale r-y, b-y und das Leuchtdichtesignal y innerhalb der integrierten Schaltung ic3 zugeführt sind. Die Bildung dieser Signale liegt ebenfalls ausserhalb des Rahmens der Erfindung und ist aus den eingangs genannten Veröffentlichungen an sich bekannt.

Die drei Analog/Digital-Wandler ddr, ddg, ddb erzeugen die Dunkelstromeinstellsignale für die drei Kathoden, die jeweils dem invertierenden Eingang der Analogverstärker vr, vg, vb zugeführt sind. An diesen Eingängen liegt ferner ein in Abhängigkeit von den digitalen Weisswerteinstellsignalen an den entsprechenden Gruppenausgängen des Schieberegisters sr gesteuertes, stufenweise einstellbares Widerstandsnetzwerk, das als Digital/Analog-Wandler dwr, dwg, dwb dient und die Verbindung zwischen dem invertierenden Eingang und dem Ausgang des jeweiligen Analogverstärkers vr, vg, vb herstellt.

Bei einer erfindungsgemässen Anordnung, die sich in der Praxis bewährt hat, sind die drei Dunkelstromeinstellsignale jeweils siebenstellig und die drei Weisswerteinstellsignale sowie das Helligkeitseinstellsignal jeweils fünfstellig. Ferner ist den Spannungen us bzw. ud/uw der drei Kathoden entsprechend der oben angegeben Tabelle ein dreistelliges digitales Kennsignal zugeordnet, das bei der ausgeführten Schaltung ebenfalls in das Schieberegister sr gelangt. Schliesslich ist auch ein dreistelliges Kontrasteinstellsignal für den Teletextbetrieb des Farbfernsehempfängers in der realisierten Schaltung vorgesehen. Diese insgesamt neun Datenblöcke werden in der ausgeführten Schaltung in folgender Reihenfolge jeweils mit dem niederstwertigen Bit als erstes und mit der angegeben Zahl von Leerstellen vom Demultiplexer dx zum Schieberegister sr übertragen: Kennsignal, Weisswertsignal Blau, drei Leerstellen, Weisswertsignal Grün, drei Leerstellen, Weisswertsignal Rot, eine Leerstelle, Dunkelstromsignal Blau, eine Leerstelle, Dunkelstromsignal Grün, eine Leerstelle, Dunkelstromsignal Rot, Kontrastsignal Teletext und Helligkeitseinstellsignal. Das sind sieben Datenblöcke zu je acht Stellen, die 56 Impulsen einer Taktfrequenz von 4,4 MHz zugeordnet sind, die die Frequenz des Schiebetaktsignals des Schieberegisters sr ist.

Es sei angemerkt, dass die eben geschilderte Datenreihenfolge nicht der Anordnungsreihenfolge der Gruppen des Schieberegisters sr in der Figur entspricht; die Reihenfolge in der Zeichnung dient lediglich der zeichnerischen Klarheit und Übersichtlichkeit.

Die Ausgänge der drei Analogverstärker vr, vg, vb liegen an den Eingängen der Videoendstufe ve, deren Ausgänge, wie eingangs bereits näher erläutert wurde, an den Basen der Transistoren tr, tg, td liegen, so dass über deren Basis-Emitterstrecke die Kathoden der Bildröhre b angesteuert sind.

Eine weitere Ausgestaltung der Erfindung besteht darin, dass die in einer Vertikalaustastlücke erfolgende Messung erst freigegeben wird, wenn der Mikroprozessor mp die Messdaten der vorausgegangenen Messung übernommen hat. Dadurch wird vermieden, dass eine Messung ausgelassen wird.

Es ist auch möglich, dem Digital/Analog-Wandler dh wegzulassen wenn anstatt der analogen RGB-Matrix m eine digitale eingesetzt wird.

Ein Vorteil der Erfindung besteht darin, dass die Doppelausnutzung des Chromabusses zur Betriebsdatenübertragung die Realisierung der dritten integrierten Schaltung ic3 in Bipolartechnik erleichtert, da eine hier an sich mögliche weitere Bus-Interfaceschaltung einen zu grossen Flächenbedarf hätte.

## Patentansprüche

1. IC-Satz mit drei integrierten Schaltungen (Ic1, ic2, ic3) zur digitalen Videosignalverarbeitung in Farbfernsehempfängern, wobei
- die erste integrierte Schaltung (ic1) einen Analog/Digital-Wandler (ad), eine diesem nachgeschaltete erste Bus-Interfaceschaltung (if1) eines seriellen Datenbusses (sb) und einen dieser nachgeschalteten ersten Multiplexer (mx1) enthält, wobei dem Analog/Digital-Wandler (ad) Messdaten, die den bei Schwarz und Weiss in jedem der drei Elektronenstrahlsysteme fliessenden Kathodenströmen der Bildröhre (b) (= Dunkelstrom, Weisswert) entsprechen, und das Signal eines Fotosensors (ls) für die Raumhelligkeit über einen zweiten Multiplexer (mx2) in der Vertikalaustastlücke und dem ersten Multiplexer (mx1) die aufbereiteten digitalen Chrominanzsignale (cs) zugeführt sind,

— die zweite integrierte Schaltung (ic2) einen Mikroprozessor (mp), einen elektrisch umprogrammierbaren Speicher (ps) und eine der ersten Bus-Interfaceschaltung (if1) entsprechende zweite Bus-Interfaceschaltung (if2) für den seriellen Datenbus (sb) enthält, wobei im Speicher (ps) vom Hersteller des Farbfernsehempfängers eingegebene Abgleichdaten und von ihm eingegebene Dunkelstrom/Weisswert-Solldaten der verwendeten Bildröhre (b) enthalten sind, aus denen und den Messdaten der Mikroprozessor (mp) videosignalunabgängige Betriebsdaten für die Bildröhre (b) erzeugt, und

— die dritte integrierte Schaltung (ic3) einen Demultiplexer (dx), eine analoge RGB-Matrix (m) und je einen Analogverstärker (vr, vg, vb) zur Ansteuerung des entsprechenden Elektronenstrahlsystems der Bildröhre (b) über externe Videoendstufen (ve) enthält, wobei über den Arbeitspunkt des jeweiligen Analogverstärkers (vr, vg, vb) die Dunkelstromeinstellung der Bildröhre (b) und über dessen Verstärkung deren Weisswerteinstellung nach entsprechender Digital/Analog-Wandlung erfolgt und der Demultiplexer (dx) über einen Chromabus (cb) mit dem ersten Multiplexer (mx1) der ersten integrierten Schaltung (ic1) verbunden ist,

gekennzeichnet durch folgende Merkmale:

— der zweite Multiplexer (mx2) besteht aus drei elektronischen Schaltern (s1, s2, s3),

— dessen erster (s1) eingangsseitig über einen ersten Widerstand (r1) am Schaltungsnullpunkt und am Kollektor eines dem jeweiligen Elektronenstrahlsystem extern zugeordneten Transistors (tr, tg, tb), dessen Basis von der entsprechenden Videoendstufe angesteuert ist und dessen Emitter mit dem entsprechenden Elektronenstrahlsystem der Bildröhre (b) verbunden ist, und ausgansseitig am Eingang des Analog/Digital-Wandlers (ad) liegt,

— dessen zweiter (s2) eingangsseitig am Fotosensor (ls) und ausgangsseitig am Eingang des Analog/Digital-Wandlers (ad) liegt, und

— dessen dritter (s3) eingangsseitig über einen zweiten Widerstand (r2) am Eingang des ersten elektronischen Schalters (s1) und ausgansseitig am Schaltungsnullpunkt liegt, wobei der Wert des zweiten Widerstandes (r2) um etwa eine Grössenordnung kleiner ist als der des ersten Widerstandes (r1),

— die drei elektronischen Schalter (s1, s2, s3) haben folgende Stellungen:

| | 1. Schalter (s1) | 2. Schalter (s2) | 3. Schalter (s3) |
|---|---|---|---|
| Während des Vertikalhinlaufs | geschlossen | offen | geschlossen |
| Während des Vertikalrücklaufs: für Leckstrom/Fotostrommessung | geschlossen/offen | offen/geschlossen | offen/geschlossen |
| Für Weisswertmessung | geschlossen | offen | geschlossen |
| Für Dunkelstrommessung | geschlossen | offen | offen |

— die Messungen des Dunkelstromes zusammen mit dem Weisswert jedes Elektronenstrahlsystems bzw. des Fotosensorstroms zusammen mit den Kathodenleckströmen erfolgen in vier aufeinanderfolgenden Vertikalaustastlücken,

— hierzu wird nach folgender Tabelle die entsprechende Kathode einerseits auf eine Spannung für Ultraschwarz (us) und andererseits auf eine Spannung für Schwarz (ud) und anschliesssend auf eine für Weiss (uw) gelegt,

| Vertikal-austastlücke Nr. | Messung | | Kathode | | |
|---|---|---|---|---|---|
| | etwa in der ersten Hälfte der Vertikalaustastlücke | etwa am Ende der Vertikalaustastlücke | Rot | Grün | Blau |
| 1 | Leckströme der Kathoden | Fotosensorstrom | us | us | us |
| 2 | Dunkelstrom Rot | Weisswert Rot | ud/uw | us | us |
| 3 | Dunkelstrom Grün | Weisswert Grün | us | ud/uw | us |
| 4 | Dunkelstrom Blau | Weisswert Blau | us | us | ud/uw |

— die Messdatenübertragung vom Analog/Digital-Wandler (ad) zum Mikroprozessor (mp) der zweiten integrierten Schaltung (ic2) erfolgt zu einem geeigneten Zeitpunkt über die beiden Interfaceschaltungen (if1, if2) und den Datenbus (sb), und

— die vom Mikroprozessor (mp) erzeugten video-signalunabhängigen Betriebsdaten für die Bild-röhre (b) werden von der zweiten integrierten Schaltung (ic2) über die beiden Interfaceschaltungen (if1, if2) und die Leitung (db) zum ersten Multiplexer (mx1) der ersten integrierten Schaltung (ic1) zu einem geeigneten Zeitpunkt und von hier kurz nach Beginn der nächsten Vertikalaustastlücke uber eine Leitung des Chromabusses (cb) in ein Schieberegister (sr) der dritten integrierten Schaltung (ic3) übertragen, an dessen pro Betriebswert zu Gruppen zusammengefassten Parallelausgängen je Gruppe ein Digital/Analog-Wandler (dh, ddr, ddg, ddb, dwr, dwg, dwb) angeschlossen ist, der die RGB-Matrix (m) bzw. den jeweiligen Analogverstärker (vr, vg, vb) ansteuert.

2. IC-Satz nach Anspruch 1, dadurch gekennzeichnet, dass an die Kathoden der Bildröhre (b) während der Datenübertragung in das Schieberegister (sr) die Spannung für Ultraschwarz (us) gelegt ist.

3. IC-Satz nach einem der Ansprüche 1 oder 2, dadurch gekennzeichnet, dass der Mikroprozessor (mp) den geeigneten Zeitpunkt für die Messdatenübertragung bestimmt und dass bei der zu diesem Zeitpunkt noch nicht beendeten Messung die Messdaten der entsprechenden früheren Messung übertragen werden.

4. IC-Satz nach einem der Ansprüche 1 bis 3, dadurch gekennzeichnet, dass die in einer Ver-tikalaustastlücke erfolgende Messung erst freige-geben wird, wenn der Mikroprozessor (mp) die Messdaten der vorausgegangenen Messung übernommen hat.

## Claims

1. Set of three integrated circuits (ic1, ic2, ic3) for digital video-signal processing in color-television receivers, wherein
— the first integrated circuit (ic1) contains an analog-to-digital converter (ad) followed by a first bus interface circuit (if1) for a serial data bus (sb), and a first multiplexer (mx1) following the first bus interface circuit (if1), the analog-to-digital converter (ad) being fed with measured data corresponding to the cathode currents of the picture tube (b) flowing at black (= dark current) and white (= white level) in each of the three electron guns, and. with the signal of an ambient-light detector (ls) via a second multiplexer (mx) in the vertical blanking interval, and the first multiplexer (mx1) being fed with the processed digital chrominance signals (cs),
— the second integrated circuit (ic2) contains a microprocessor (mp), an electrically reprogrammable memory (ps), and a second serial-data-bus interface circuit (if2) corresponding to the first bus interface circuit (if1), the memory (ps) holding alignment data and nominal dark-current/white-level data of the picture tube used (b) which were entered by the manufacturer of the color-television receiver and, together with the measured data, are used by the microprocessor (mp) to generate video-signal-independent operating data for the picture tube (b), and
— wherein the third integrated circuit (ic3) contains a demultiplexer (dx), an analog RGB matrix (m), and three analog amplifiers (vr, vg, vb) each designed to drive one of the electron guns via an external video output stage (ve), the dark current of the picture tube (b) being adjusted via the operating point of the respective analog amplifier, and the white level of the picture tube (b) being adjusted by adjusting the gain of the respective amplifier after digital-to-analog conversion, and with the demultiplexer (dx) connected to the first multiplexer (mx1) of the first integrated circuit (ic1) via a chroma bus (cb), characterized by the following features:
— the second multiplexer (mx2) consists of three electronic switches (s1, s2, s3),
— the first of which (s1) has its input grounded through a first resistor (r1) and connected to the collectors of external transistors (tr, tg, tb) which are each associated with one of the electron guns and the base of each of wich is driven by the associated video output stage, while the emitter is connected to the associated electron gun system, and the output of the first switch (s1) is connected to the input of the analog-to-digital converter (ad),
— the second of which (s2) has its input connected to the light detector (ls) while its output is coupled with the input of the analog-to-digital converter (ad), and
— the third of which (s3) has its input connected to the input of the first electronic switch (s1) via a second resistor (r2), and its output is grounded, the value of the second resistor (r2) being about one order of magnitude smaller than that of the first resistor (r1),
— the three electronic switches (s1, s2, s3) have the following positions:

| During vertical sweep | 1st switch (s1) | 2nd switch (s1) | 3rd switch (s3) |
|---|---|---|---|
| | closed | open | closed |
| During vertical retrace: for leakage/light-detector current measurement | closed/open | open/closed | open/closed |
| For white level measurement | closed | open | closed |
| For dark current measurement | closed | open | open |

— the measurements of the dark current together with the white level of each electron gun and the measurements of the light-detector current together with the cathode-leakage currents are performed in four sucessive vertical blanking intervals,

— to this end, the cathodes are connected at one end to a voltage for blacker than black (us), and a the other end to a voltage for black (ud) and then to a voltage white (uw) in accordance with the following table:.

| Vertical blanking interval No. | Measurement | | Cathode | | |
| | in the first half of the vertical blanking interval | at about the end of the vertical blanking interval | red | green | blue |
|---|---|---|---|---|---|
| 1 | Leakage currents of the cathodes | Light-detector current | us | us | us |
| 2 | Dark current red | White level red | ud/uw | us | us |
| 3 | Dark current green | White level green | us | ud/uw | us |
| 4 | Dark current blue | White level blue | us | us | ud/uw |

— the measured data are transferred from the analog-to-digital converter (ad) to the microprocessor (mp) of the second integrated circuit (ic2) via the two interface circuits (if1, if2) and the data bus (sb) at an appropriate instant, and

— the video-signal-independent operating data for the picture tube (b), which are generated by the microprocessor (mp), are transferred from the second integrated circuit (ic2) via the two interface circuits (if1, if2) and a line (db) to the first multiplexer (mx1) of the first integrated circuit (ic1) at an appropriate instant, and from there over a wire of the chroma bus (cb) into a shift register (sr) of the third integrated circuit (ic3) shortly after the beginning of the next vertical blanking interval, the parallel outputs of which shift register (sr) are combined in groups each assigned to one type of operating value, and each of the groups is connected to one digital-to-analog converter (dh, ddr, ddg, ddb, dwr, dwg, dwb) which drives the RGB matrix (m) or the respective analog amplifier (vr, vg, vb).

2. An integrated-circuit set as claimed in Claim 1, characterized in that the voltage for blacker than black (us) is applied to the cathodes of the picture tube (b) during the data transfer to the shift register (sr).

3. An integrated-circuit set as claimed in Claim 1 or 2, characterized in that the microprocessor (mp) determines the appropriate instant for the measured-data transfer, and that, if a measurement has not yet been finished at that instant, the measured data of the corresponding earlier measurement are transferred.

4. An integrated-circuit set as claimed in one of Claims 1 to 3, characterized in that the measurement performed in a vertical blanking interval is not enabled until the data of the preceding measurement have been transferred to the microprocessor (mp).

**Revendications**

1. Ensemble de circuits intégrés, comportant trois circuits intégrés (ic1, ic2, ic3) pour le traitement numérique du signal vidéo dans les récepteurs de télévision en couleurs, dans lequel

— le premier circuit intégré (ic1) comporte un convertisseur analogique-numérique (ad) et, suivant celui-ci, un premier circuit d'interface de bus (if1) d'un bus de données série (sb) et, suivant ce dernier, un premier multiplexeur (mx1), le convertisseur analogique-numérique (ad) recevant, au cours de l'intervalle de suppression verticale, des données de mesure qui correspondent aux courants cathodiques du tube image (b) dans chacun des trois générateurs de faisceau électronique pour le noir et le blanc (courant de noir, niveau du blanc), et recevant le signal d'un photosenseur (Is), lequel capte la luminosité de l'environnement, par un deuxième multiplexeur (mx2), et le premier multiplexeur (mx1) recevant les signaux de chrominance numériques traités (cs),

— le deuxième circuit intégré (ic2) contient un microprocesseur (mp), une mémoire reprogrammable (ps) et un deuxième circuit d'interface de bus (if2), pour bus de données série (sb), correspondant au premier circuit d'interface de bus (if1), la mémoire (ps) contenant des données de réglage entrées par le fabricant du récepteur de téléviseurs en couleurs et des données de consigne de courant de noir/niveau du blanc, rentrées par ce fabricant, relatives au tube image utilisé (b), le microprocesseur (mp) élaborant, à partir de ces données et à partir des données de mesure, des données de fonctionnement pour le tube image (b) indépendantes du signal vidéo, et

— le troisième circuit intégré (ic3) contient un démultiplexeur (dx), une matrice RVB analogique (m) et un amplificateur analogique (vr, vg, vb), propre à chaque couleur, pour commander le générateur de faisceau électronique correspondant du tube (b) par l'intermédiaire d'étages de sortie vidéo (ve), le réglage du courant de noir du tube image (b) étant effectué par le choix du point de fonctionnement de chaque amplificateur analogique (vr, vg, vb) et celui du niveau du blanc par le réglage du gain de cet amplificateur, après conversion numérique-analogique appropriée, le démultiplexeur (dx) étant relié via un bus de chrominance (cb), au premier multiplexeur (mx1) du premier circuit intégré (ic1),
caractérisé par les dispositions suivantes:
— le deuxième multiplexeur (mx2) est constitué de trois interrupteurs électroniques (s1, s2, s3)

— dont le premier (s1) est connecté, côté entrée, par une première résistance (r1) au point zéro du circuit et aux collecteurs de transistors externes (tr, tg, tb) associés chacun à un générateur de faisceau électronique concerné, dont la base est commandée par l'étage de sortie vidéo correspondant et dont l'émetteur est relié au générateur de faisceau électronique correspondant du tube image (b) et, côté sortie, à l'entrée du convertisseur analogique-numérique (ad),
— dont le deuxième (s2) est connecté, côté entrée, au photosenseur (ls) et, côté sortie, à l'entrée du convertisseur analogique-numérique (ad), et
— dont le troisième (s3) est connecté, côté entrée, via une deuxième résistance (r2), à l'entrée du premier interrupteur électronique (s1) et, côté sortie, au point zéro du circuit, la valeur de la deuxième résistance (r2) étant d'environ un ordre de grandeur plus petite que celle de la première résistance (r1),
— les trois interrupteurs électroniques (s1, s2, s3) ont les positions suivantes:

| | Premier interrupteur (s1) | Deuxième interrupteur (s2) | Troisième interrupteur (s3) |
|---|---|---|---|
| Pendant le balayage vertical | fermé | ouvert | fermé |
| Pendant le retour vertical: pour mesure courant de fuite, photocourant | fermé/ouvert | ouvert/fermé | ouvert/fermé |
| Pour mesurer le niveau du blanc | fermé | ouvert | fermé |
| Pour mesurer le courant de noir | fermé | ouvert | ouvert |

— les mesures respectives du courant de noir en conjonction avec le niveau du blanc de chaque générateur de faisceau électronique et du courant du photosenseur en conjonction avec les courants de fuite des cathodes s'effectuent dans quatre intervalles de suppression verticale successifs,

— à cet effet, la cathode correspondante est connectée, d'une part, à une tension de suppression (us) et, d'autre part, à une tension de noir (ud) et ensuite à une tension de blanc (uw), selon le tableau ci-après:

| Numéro de l'intervalle de suppression verticale | Mesure | | Cathode | | |
|---|---|---|---|---|---|
| | dans la première moitié de l'intervalle de suppression verticale | vers la fin de l'intervalle de suppression verticale | rouge | vert | bleu |
| 1 | Courants de fuite des cathodes | Courant du photosenseur | us | us | us |
| 2 | Courant de noir rouge | Niveau du blanc rouge | ud/uw | us | us |
| 3 | Courant de noir vert | Niveau du blanc vert | us | ud/uw | us |
| 4 | Courant de noir bleu | Niveau du blanc bleu | us | us | ud/uw |

— le transfert des données de mesure du convertisseur analogique-numérique (ad) au microprocesseur (mp) du deuxième circuit intégré (ic2) s'effectue, à un instant approprié, via les deux circuits d'interface (if1, if2) et le bus de données (sb),
— les données de fonctionnement du tube-image (b) produites par le microprocesseur (mp), indépendantes du signal vidéo, sont transmises par le deuxième circuit intégré (ic2), via les deux circuits d'interface (if1, if2) et la ligne (db), au premier multiplexeur (mx1) du premier circuit intégré (ic1), à un instant approprié et, de là, peu après le début de l'intervalle de suppression verticale suivant, via une ligne de bus de chrominance (cb) dans un registre à décalage (sr) du troisième circuit intégré (ic3), registre dont les sorties parallèles, combinées en groupes par valeurs de fonctionnement, sont raccordées à des convertisseurs numériques-analogiques (dh, ddr, ddg, ddb, dwr, dwg, dwb), un par groupe, lesquels commandent la matrice RVB (m) ou encore l'amplificateur analogique (vr, vg, vb) correspondant.

2. Ensemble de circuits selon la revendication 1, caractérisé en ce que la tension de suppression (us) est appliquée aux cathodes du tube-image (b) pendant le transfert de données dans le registre à décalage (sr).

3. Ensemble de circuits selon l'une des revendications 1 ou 2, caractérisé en ce que le microprocesseur (mp) détermine l'instant approprié au transfert des données de mesure, et en ce que, dans le cas d'une mesure encore inachevée à cet instant, ce sont les données mesurées lors de la mesure antérieure correspondant qui sont transmises.

4. Ensemble selon l'une des revendications 1 à 3, caractérisé en ce que la mesure s'effectuant dans un intervalle de suppression verticale n'est admise que si le microprocesseur (mp) a pris en compte les données de la mesure précédente.